# EUROPÄISCHE PATENTSCHRIFT

(11) **EP 0 889 307 B1**
(45) Veröffentlichungstag und Bekanntmachung des Hinweises auf die Patenterteilung: **03.09.2003**
(21) Anmeldenummer: 98250198.3
(22) Anmeldetag: 08.06.1998
(51) Int. Cl.: G01J 3/28, G01J 3/51

(54) **Bildgebendes Spektrometer**
Imaging spectrometer
Spectromètre pour imagerie

(30) Priorität: 01.07.1997 DE 19728966
(43) Veröffentlichungstag der Anmeldung: 07.01.1999
(73) Patentinhaber: OptoMed Optomedical Systems GmbH, 12489 Berlin (DE)
(72) Erfinder: Wilkens, Jan H., Dr. med., 66242 Homburg (DE); Renschen, Claus-Peter, Dr., 01277 Dresden (DE)
(74) Vertreter: Effert, Bressel und Kollegen

(56) Entgegenhaltungen:
- EP-A- 0 512 965
- DE-A- 19 616 176
- PATENT ABSTRACTS OF JAPAN vol. 096, no. 008, 30. August 1996 & JP 08 110486 A (TOSHIBA CORP), 30. April 1996 & US 5 704 896 A (SEKIGUCHI TADASHI ET AL) 6. Januar 1998

## Beschreibung

Die Erfindung betrifft ein bildgebendes Spektrometer, insbesondere für den Einsatz in Endoskopen, Operationsmikroskopen und Colposkopen zur Diagnostik von Körpergewebe.

Bei bekannten Endoskopen wird weißes Licht mit Hilfe einer Faseroptik in die Körperhöhlen eingekoppelt, wo dann das einfallende Licht reflektiert, gestreut und absorbiert wird. Der reflektierte und gestreute Anteil wird auf einen faseroptischen Bildleiter fokussiert. Der Bildleiter besteht üblicherweise aus mehreren tausend Einzelfasern, die ein kohärentes Bild aus dem Körper übertragen. Dieses Bild wird dann durch ein endoskopisches Okular für einen Beobachter (z.B. den behandelnden Arzt) projiziert. Alternativ kann anstelle des Okulars eine Farbbildkamera verwendet werden, so daß die Reflexionsbilder (bei zu vernachlässigender Streuung) auf einem Farbbildschirm für einen Betrachter darstellbar sind. Mit den bekannten Endoskopen und den zuvor beschriebenen Abbildungstechniken können große invasive Tumore leicht und relativ zuverlässig diagnostiziert werden. Frühe, oberflächliche, nicht-invasive Karzinome bleiben jedoch oft unentdeckt.

Aus der WO-A-90/10219 und der WO-A-86/02730 ist ein endoskopisches bildgebendes System für die Tumordiagnose bekannt. Dabei wird das Licht eines Faserbündels in vier Strahlengänge gespalten. In jedem Strahlengang ist ein unterschiedlicher Farbfilter angeordnet. Hinter den Farbfiltern werden die Strahlengänge auf einer intensivierten CCD-Kamera abgebildet. Das digitale Bild wird auf einem Bildschirm dargestellt, der ein Falschfarbbild ermittelt.

Bei allen beschriebenen Systemen stehen entweder nur ein Spektrogramm ohne Bildinformation oder maximal vier spektrale Bildinformationen zur Verfügung. Die Verwendung von Prismen oder Farbfiltern setzt gleiche Strahlengänge zur Abbildung der anteiligen Farbinformationen voraus. Infolge technisch ungelöster Probleme mit Mehrfachreflexionen der Prismen ist zur Zeit technisch keine Anordnung realisierbar, die mehr als vier Teilbilder mittels Strahlteiler erzeugt. Zur zuverlässigen Diagnose von Tumoren anhand einer Bildinformation sind jedoch mindestens 16 besser noch 32 spektral unterschiedliche Teilbilder nötig, die zeitgleich zu überlagern wären.

Weiter ist aus der US-4,678,332 eine Vorrichtung zur zeitgleichen Analyse des Spektrums eines Objektes bekannt, bei der die Strahlung eines Objektes mittels einer Sammel-Optik in einen faseroptischen Querschnittswandler eingekoppelt wird. Die nahezu linienförmige Ausgangsstrahlung wird mittels einer Kollimatoroptik auf ein Beugungsgitter abgebildet und spektral zerlegt und über eine weitere Optik auf einen matrixförmigen optischen Detektor abgebildet.

Aus der Zeitschrift "Photochemistry and Photobiology", 1996, 63 (5), 608 - 614 ist ein bildgebendes Spektrometer bekannt, bei dem mittels eines Sagnac-Interferometers Interferenzerscheinungen bei Überlagerung von Lichtwellen für Meß- und Beobachtungszwecke ausgewertet werden. Mit Hilfe eines Scan-Vorgangs wird ein Interferogramm auf einem CCD-Chip abgebildet. Eine nachfolgende Fourier-Transformation ergibt dann ein Spektrum auf jedem Pixel. Die Bilderfassung mit Hilfe dieses Verfahrens dauert ca. 50 s. Hieran schließen sich noch 2 bis 4 Minuten Bildaufbereitungszeit an. Die gewonnenen Bilder enthalten 10 bis 30 Spektralinformationen pro Bildpixel und eignen sich sehr gut zur Unterscheidung von Objekten mit nur geringfügigen spektralen Unterschieden. Jedoch beschränkt die relativ langsame Bildaufbereitung die Anwendung der Vorrichtung auf mikroskopische Messungen sowie zur Erfassung sich nur langsam oder nur kaum bewegender Objekte. Für die klinische Bilderfassung ist das Verfahren bzw. die Vorrichtung daher ungeeignet. Darüber hinaus ist der optische und mechanische Aufbau der Vorrichtung sehr komplex und kostenintensiv.

Aus der DE 196 16 176 A1 ist eine Vorrichtung zur Erkennung von Eigenschaften bewegter Objekte mit einer mit einer Filteranordnung versehenen Detektoranordnung zum Aufzeichnen und Belichten von Bildern der Objekte in unterschiedlichen Wellenlängenbereichen, einem Speicher zum Speichern der wellenlängenabhängigen Bildpunktinformationen und einer Auswerteeinheit, die abhängig von vorgegebenen Wellenlängeninformationen der Objekte und abhängig von der wellenlängenabhängigen Bildpunktinformationen die Eigenschaften der Objekte bestimmt, wobei zwischen Objekt und Detektoranordnung mindestens zwei wellenlängenselektive Filter und mindestens zwei den Filtern zugeordnete Abbildungsoptiken zum Projizieren von Objektbildern unterschiedlicher Wellenlängen auf unterschiedliche örtliche Bereiche der Detektoranordnung angeordnet sind. Nachteilig an der bekannten Vorrichtung ist die feste Vorgabe zwischen örtlicher- und spektraler Auflösung. Insbesondere im Bereich der Diagnostik ist es jedoch erforderlich, einen weiten Gewebsbereich auf Veränderungen abzusuchen. Wird dann eine verdächtige Gewebspartie entdeckt, so wird diese dann genauer untersucht. Da jedoch zur eindeutigen Diagnose bis zu 16 Spektralinformationen benötigt werden, bedeutet dies eine entsprechende Einschränkung der örtlichen Auflösung, was wiederum das Auffinden erschwert.

Der Erfindung liegt daher das technische Problem zugrunde, ein bildgebendes Spektrometer zu schaffen, mit dem nahezu simultan eine spektrale Bilderfassung möglich ist, so daß dieses insbesondere für die Diagnostik von Tumorgewebe geeignet ist und das eine variable Veränderung der örtlichenund spektralen Auflösung erlaubt.

Die Lösung des Problems ergibt sich durch die Merkmale des Patentanspruches 1. Durch die Ausbildung der Abbildungsoptiken als Mikrolinsenarray, wobei zwischen dem Mikrolinsenarray und dem optischen Detektor ein Zoom-Objektiv angeordnet ist, kann nach Bedarf zwischen einer hohen örtlichen oder spektralen Auflösung umgeschaltet werden. Die Vermeidung von Strahlenteilern, Schrittmotoren und Interferometern erlaubt darüber hinaus einen kompakten und kostengünstigen Aufbau. Weitere vorteilhafte Ausgestaltungen der Erfindung ergeben sich aus den Unteransprüchen.

In einer bevorzugten Ausführungsform zur endoskopischen Anwendung wird das bildgebende Spektrometer an einen vorhandenen Teaching-Anschluß gekoppelt. Dieser Teaching-Anschluß dient normalerweise zur Beobachtung des endoskopischen Eingriffs durch Studenten oder Assistenz-Ärzte. Somit kann die Bildanalyse parallel zur Arbeit des Arztes ablaufen. Zudem kann dann die Vorrichtung als Modul ausgebildet werden, die, einmal justiert, immer wieder entfernt werden kann, so daß die Vorrichtung nicht zusammen mit dem Endoskop desinfiziert zu werden braucht.

Die Erfindung wird nachfolgend anhand eines bevorzugten Ausführungsbeispiels näher erläutert. Die Fig. zeigen:
- Fig. 1: eine schematische Perspektivdarstellung des bildgebenden Spektrometers mit hoher örtlicher und geringer spektraler Auflösung,
- Fig. 2: eine schematische Perspektivdarstellung des bildgebenden Spektrometers mit mittlerer örtlicher und spektraler Auflösung und
- Fig. 3: eine schematische Perspektivdarstellung des bildgebenden Spektrometers mit hoher spektraler und geringer örtlichen Auflösung.

Das bildgebende Spektrometer 1 umfaßt eine Eingangsoptik 2, ein Filterarray 3, ein Mikrolinsenarray 4 ein Zoom-Objektiv 5 und einen ortsauflösenden, spektralempfindlichen, optischen Detektor 6. Mittels der Eingangsoptik 2 wird die von einem zu untersuchenden Objekt 7 kommende Licht in den dahinterliegenden Halbraum gemischt und trifft auf das Filterarray 3, wobei an jedem Filter 8 des Filterarrays 3 die volle Bildinformation von dem Objekt 7 zur Verfügung steht. Das Filterarray 3 umfaßt 36 Filter 8, die quadratisch segmentiert sind. Die Filter 8, die vorzugsweise als Interferenzfilter ausgebildet sind, lassen jeweils nur einen für jeden Filter 8 unterschiedlichen Spektralbereich des Lichts transmittieren, wobei die Bandbreite der Filter 8 ca. 5-20 nm beträgt. Der Vorteil von Interferenzfiltern gegenüber Absorptionsfiltern sind deren schärfere Kanten. Allerdings kann zur Erzeugung bestimmter Spektralbereiche ein kombinierter Einsatz von Interferenz- und Absorptionsfiltern vorteilhaft sein, die dazu hintereinander angeordnet sind. Zur flexiblen Anpassung an unterschiedliche Problemstellungen ist das Filterarray 3 vorzugsweise lösbar in dem bildgebenden Spektrometer 1 angeordnet, so daß je nach Anwendungsgebiet spezielle Filterarrays 3 einsetzbar sind. Die mittig angeordneten Filter 8 sind dabei beispielsweise derart gewählt, daß diese einen RGB-Filtersatz bilden, die dazu vorzugsweise als Absorptionsfilter ausgebildet sind.

Hinter dem Filterarray 3 ist das Mikrolinsenarray 4 angeordnet, wobei jeder Linse 9 des Mikrolinsenarrays 4 vorzugsweise genau ein Filter 8 des Filterarrays 3 zugeordnet ist und Filterarray 3 und Mikrolinsenarray 4 zueinander ausgerichtet sind. Prinzipiell können jedoch das Filterarray 3 und das Mikrolinsenarray 4 in der Reihenfolge der Anordnung vertauscht werden. Vorzugsweise ist das Mikrolinsenarray 4 als aktives LCD-Mikrolinsenarray ausgebildet, deren optische Eigenschaften mittels einer Steuerspannung in gewissen Bereichen veränderbar ist, so daß nach dem Zusammenbau eine Nachjustierung möglich ist. Dies ist insbesondere dann vorteilhaft, wenn auf eine separate Eingangsoptik 2 verzichtet wird und das Mikrolinsenarray 4 selbst die Eingangsoptik des bildgebenden Spektrometers 1 bildet. Alternativ können die Linsen 9 als achromatische Linsen mit einem Durchmesser von 2 bis 3 mm und einer Brennweite von 10 bis 20 mm ausgebildet sein. Hinter dem Mikrolinsenarray 4 ist anschaulich das vollständige Objektbild in 36 verschiedenen Spektralbereichen simultan auf dem optischen Detektor abbildbar. Zur Fokussierung der Ausgangsstrahlung des Linsenarrays 4 auf den optischen Detektor 6, sowie zur variablen Veränderung der Orts- und Spektralauflösung ist zwischen dem Linsenarray 4 und dem optischen Detektor 6 das Zoom-Objektiv 5 angeordnet, wobei zur besseren Adaption an den optischen Detektor 6 vorzugsweise vor dem Zoom-Objetiv 5 eine Quadrat-Blende angeordnet ist. Die Brennweite des Zoom-Objektivs 5 ist von außen über eine nicht dargestellte Steuerung veränderbar. Die unveränderliche Bildebene des Zoom-Objektivs 5 ist der optische Detektor 6, der von dem Zoom-Objetiv 5 nahezu vollständig beleuchtet wird.

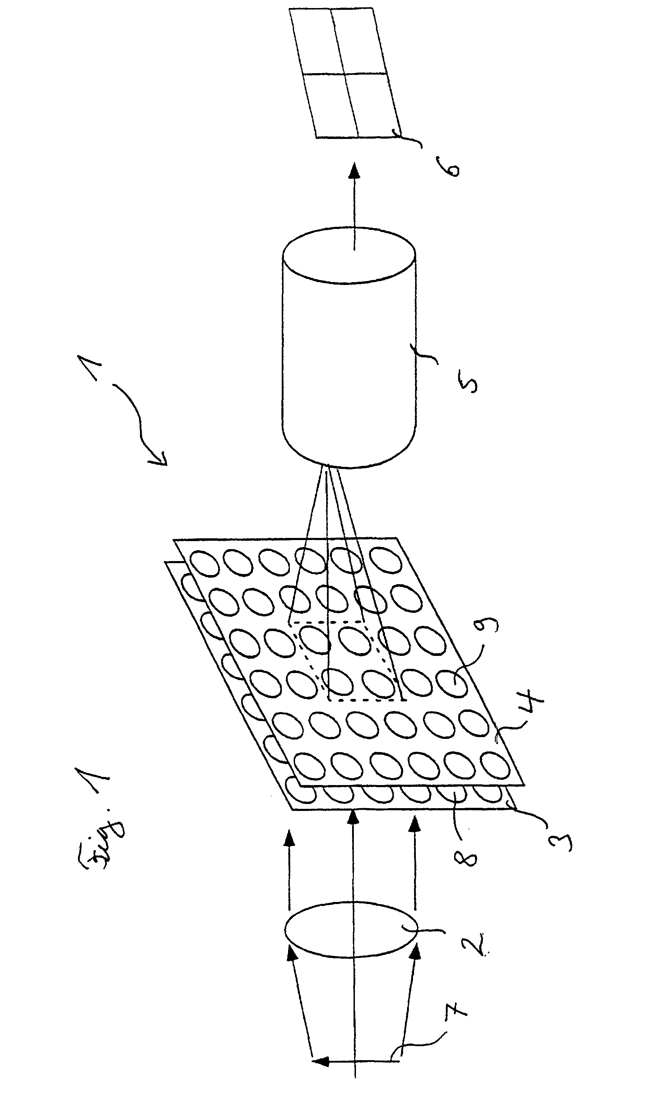

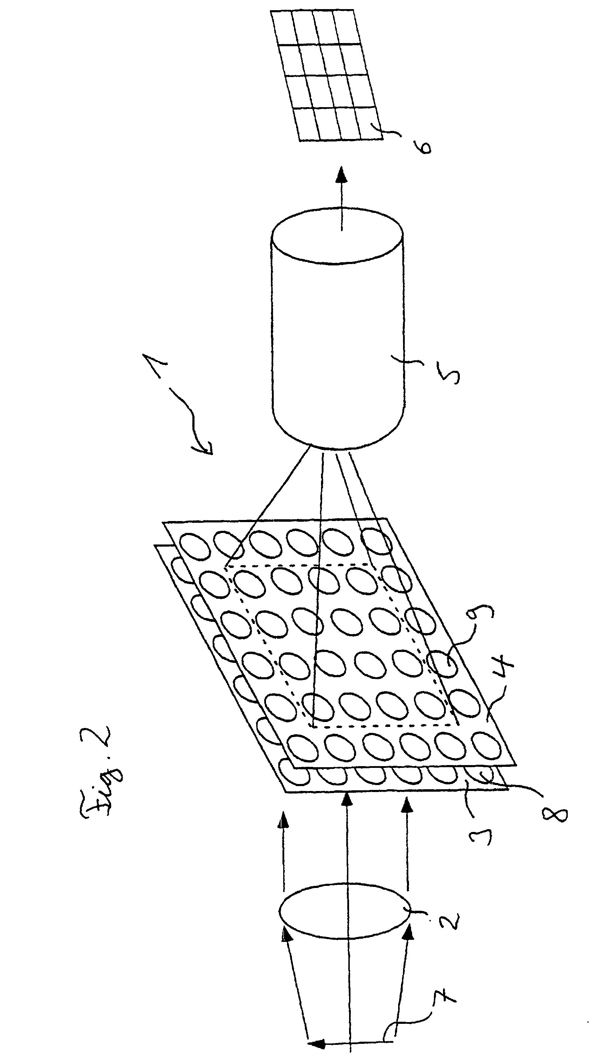

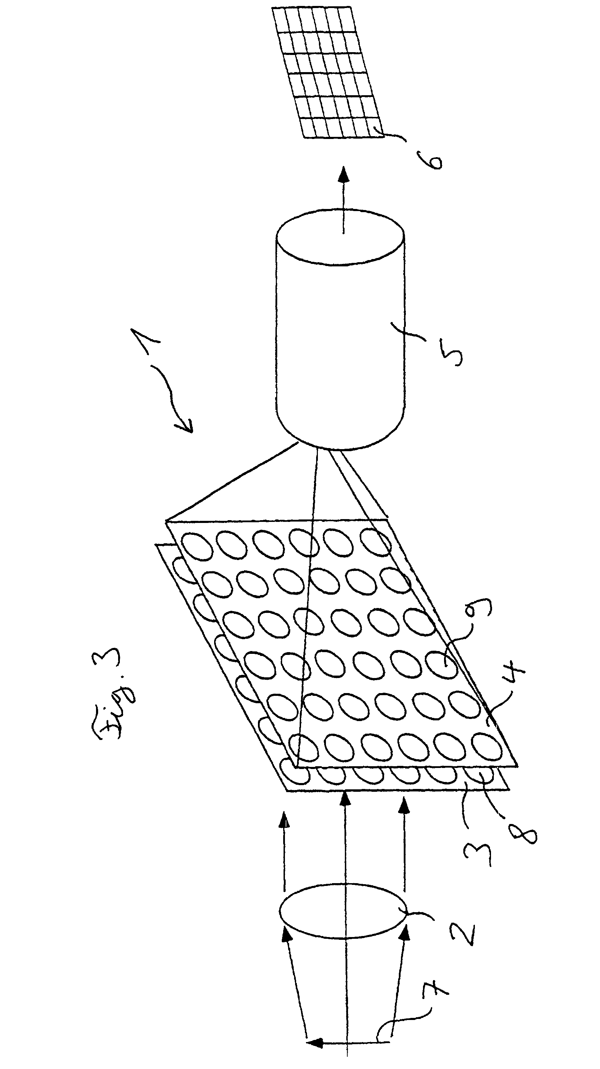

In einer ersten Einstellung bildet das Zoom-Objektiv 5 nur die Ausgangsstrahlung der vier mittig angeordneten Linsen 9 auf den optischen Detektor 6 ab, was in der Fig.1 gestrichelt dargestellt ist. Sind die mittig angeordneten Filter 8 als RGB-Filtersatz ausgebildet, so wird das Objektbild vierfach auf den optischen Detektor 6 mit jeweils unterschiedlichen Spektralinformationen abschnittsweise abgebildet. Wird der optische Detektor 6 als CCD-Matrix mit 1200 X 1000 Pixeln ausgebildet, verbleibt somit eine örtliche Auflösung von ca. 300000 Pixeln. Zur Erhöhung der spektralen Auflösung kann das Zoom-Objektiv 5 dann in der Brennweite derart verändert werden, daß die 16 mittig angeordneten Linsen 9 auf den optischen Detektor 6 abgebildet werden, was in der Fig.2 gestrichelt dargestellt ist, so daß immer noch ca. 75000 Pixel für die Ortsauflösung zur Verfügung stehen. In einer dritten Einstellung kann dann das gesamte Filterarray 4 auf den optischen Detektor 6 abgebildet werden, so daß unter Abzug des mittig angeordneten RGB-Filtersatzes noch 32 unterschiedliche Spektralinformationen des Objektbildes darstellbar sind, was in Fig.3 dargestellt ist. Zur Erhöhung der Ortsauflösung kann der optische Detektor 6 auch durch mehrere CCD-Matrizen gebildet werden.

Neben der zuvor beschriebenen 4-16-36 Darstellungsform kann auch eine 1-9-25 Darstellung gewählt werden. In diesem Fall wird das mittig angeordnete Filter 8 vorzugsweise mit einem weiten Durchlaßbereich ausgebildet, so daß eine gute spektrale Übersicht erzielt wird. Der Vorteil einer solchen Ausführungsform ist die erhöhte örtliche Auflösung in der ersten Einstellung bei gleicher aktiver Fläche des optischen Detektors 6.

Für die Ausgabe kann weiter vorgesehen sein, daß jeweils mehrere Spektralbilder zusammen aus dem optischen Detektor 6 ausgelesen werden, so daß ein entsprechendes Farbbild entsteht. Zur Unterdrückung von Streulicht werden das Mikrolinsenarray 4, das zugehörigen Filterarray 3 und der optische Detektor 6 in einem Gehäuse angeordnet, dessen Innenwände geschwärzt und/oder mikrostrukturiert sind, so daß das Absorptionsvermögen nahezu 1 ist.

Neben der besonders hervorgehobenen endoskopischen, operationsmikroskopischen und calposkopischen Anwendung läßt sich das bildgebende Spektrometer 1 in vielen anderen Gebieten, wie z.B. spektrale Karyotypisierung von Chromosomen, Erfassung von Schadstoffen in Luft, Wasser und Boden, Bodenaufklärung, Geldscheinanalyse, Erfassung verblichener historischer Schriften und Müllsortierung bei gleichfarbigen Kunststoffen mit spektralen Unterschieden anwenden.

## Patentansprüche

1. Bildgebendes Spektrometer (1), umfassend eine Anzahl von Abbildungsoptiken, denen jeweils spektralselektive Filter (8) zugeordnet sind, und mindestens einen ortsauflösenden, spektralempfindlichen optischen Detektor (6), wobei durch die Abbildungsoptiken spektralunterschiedliche Objektbilder auf unterschiedliche örtliche Bereiche des optischen Detektors (6) abbildbar sind,
**dadurch gekennzeichnet, daß**
die Abbildungsoptiken als Mikrolinsenarray (4) ausgebildet sind und zwischen dem optischen Detektor (6) und dem Mikrolinsenarray (4) ein Zoom-Objektiv (5) angeordnet ist, mittels dessen eine variable Orts- und Spektralauflösung einstellbar ist.

2. Bildgebendes Spektrometer (1) nach Anspruch 1, **dadurch gekennzeichnet, daß**,das Mikrolinsenarray (4) als aktives, spannungsgesteuertes LCD-Mikrolinsenarray ausgebildet ist.

3. Bildgebendes Spektrometer (1) nach Anspruch 1 oder 2, **dadurch gekennzeichnet, daß** die spektralselektiven Filter (8) als Interferenzfilter und/oder Absorptionsfilter ausgebildet sind.

4. Bildgebendes Spektrometer (1) nach einem der Ansprüche 1 bis 3, **dadurch gekennzeichnet, daß** das Mikrolinsenarray (4), der optische Detektor (6) und die spectralselektiven filter (8) in einem Gehäuse angeordnet sind, dessen Innenwände geschwärzt und/oder mikrostrukturiert sind.

5. Bildgebendes Spektrometer (1) nach einem der Ansprüche 1 bis 4, **dadurch gekennzeichnet, daß** die Linsen (9) des Mikrolinsenarrays (4) als kleine Achromate ausgebildet sind.

6. Bildgebendes Spektrometer (1) nach einem der Ansprüche 1 bis 5, **dadurch gekennzeichnet, daß** der optische Detektor (6) als mindestens eine CCD-Matrix oder -Zeile ausgebildet ist.

7. Bildgebendes Spektrometer (1) nach einem der Ansprüche 1 bis 6, **dadurch gekennzeichnet, daß** die spektralselektiven Filter (8) als Filterarray (3) ausgebildet sind.

8. Bildgebendes Spektrometer (1) nach einem der vorangegangenen Ansprüche, **dadurch gekennzeichnet, daß** die mittig im Filterarray (3) angeordneten Filter (8) einen RGB-Filtersatz bilden.

9. Bildgebendes Spektrometer (1) nach einem der vorangegangenen Ansprüche, **dadurch gekennzeichnet, daß** das bildgebende Spektrometer (1) als ein an ein Endoskop, Operationsmikroskop oder Colposkop ankoppelbares Modul ausgebildet ist.

## Claims

1. Imaging spectrometer (1), including a number of optical imaging systems, spectral-selective filters (8) being respectively associated with said systems, and at least one locus-resolving, spectral-sensitive optical detector (6), spectrally different object images being imagible onto different local regions of the optical detector (6) by the optical imaging systems, **characterised in that** the optical imaging systems are in the form of a microlens array (4), and a zoom lens (5) is disposed between the optical detector (6) and the microlens array (4), a variable locus and spectral resolution being adjustable by means of said zoom lens.

2. Imaging spectrometer (1) according to claim 1, **characterised in that** the microlens array (4) is in the form of an active, voltage-controlled LCD microlens array.

3. Imaging spectrometer (1) according to claim 1 or 2, **characterised in that** the spectral-selective filters (8) are in the form of interference filters and/or absorption filters.

4. Imaging spectrometer (1) according to one of claims 1 to 3, **characterised in that** the microlens array (4), the optical detector (6) and the spectral-selective filters (8) are disposed in a housing, the internal walls of which are blackened and/or microstructured.

5. Imaging spectrometer (1) according to one of claims 1 to 4, **characterised in that** the lenses (9) of the microlens array (4) are in the form of small achromats.

6. Imaging spectrometer (1) according to one of claims 1 to 5, **characterised in that** the optical detector (6) is in the form of at least one CCD matrix or line.

7. Imaging spectrometer (1) according to one of claims 1 to 6, **characterised in that** the spectral-selective filters (8) are in the form of a filter array (3).

8. Imaging spectrometer (1) according to one of the preceding claims, **characterised in that** the filters (8), which are disposed centrally in the filter array (3), form an RGB filter set.

9. Imaging spectrometer (1) according to one of the preceding claims, **characterised in that** the imaging spectrometer (1) is in the form of a module which can be connected to an endoscope, an operational microscope or a colposcope.

## Revendications

1. Spectromètre à affichage (1) comprenant plusieurs optiques de reproduction munies de filtres (8) spectraux et au moins un détecteur optique (6) à résolution locale sensible au spectre, moyennant quoi, des images d'objets de spectres différents peuvent être représentées sur différentes zones localisées du détecteur optique (6) à l'aide des optiques de reproduction, **caractérisé en ce que** les optiques de reproduction sont conçus comme un réseau de micro-lentilles (4) et **en ce qu'**entre le détecteur optique (6) et le réseau de micro-lentilles (4) se trouve un objectif muni d'un zoom (5) à l'aide duquel une résolution locale et spectrale variable peut être ajustée.

2. Spectromètre à affichage (1) selon la revendication 1, **caractérisé en ce que** le réseau de micro-lentilles (4) est conçu comme un réseau de micro-lentilles LCD actif contrôlé à l'aide d'une tension.

3. Spectromètre à affichage (1) selon la revendication 1 ou 2, **caractérisé en ce que** les filtres spectraux (8) sont conçus comme des filtres d'interférence et/ou des filtres d'absorption.

4. Spectromètre à affichage (1) selon l'une des revendications 1 à 3, **caractérisé en ce que** le réseau de micro-lentilles (4), le détecteur optique (6) et les filtres spectraux (8) se trouvent dans un boîtier dont les parois internes sont noircies et/ou microstructurées.

5. Spectromètre à affichage (1) selon l'une des revendications 1 à 4, **caractérisé en ce que** les lentilles (9) du réseau de micro-lentilles (4) sont conçues comme des petites lentilles achromatiques.

6. Spectromètre à affichage (1) selon l'une des revendications 1 à 5, **caractérisé en ce que** le détecteur optique (6) est constitué d'au moins une matrice ou une ligne CCD.

7. Spectromètre à affichage (1) selon l'une des revendications 1 à 6, **caractérisé en ce que** les filtres spectraux (8) sont conçus comme un réseau de filtres (3).

8. Spectromètre à affichage (1) selon l'une des revendications précédentes, **caractérisé en ce que** les filtres (8) se trouvant au centre du réseau de filtres (3) constituent un ensemble de filtres RGB.

9. Spectromètre à affichage (1) selon l'une des revendications précédentes, **caractérisé en ce que** le spectromètre à affichage (1) est conçu comme un module pouvant être relié à un endoscope, un microscope d'opération ou un coloscope.
